(19)

**Europäisches Patentamt**
**European Patent Office**
**Office européen des brevets**

(11) **EP 3 868 907 A1**

(12) **EUROPEAN PATENT APPLICATION**

(43) Date of publication:
**25.08.2021 Bulletin 2021/34**

(51) Int Cl.:
**C22B 21/00** (2006.01)          **C22B 1/18** (2006.01)
**C22B 7/00** (2006.01)          **B09B 3/00** (2006.01)

(21) Application number: **20000382.0**

(22) Date of filing: **21.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2019 SI 201900265**

(27) Previously filed application:
**31.12.2019 SI 201900265**

(71) Applicant: **ZRS Bistra Ptuj**
**2250 Ptuj (SI)**

(72) Inventors:
• **Klinar, Dusan**
  **3000 Celje (SI)**
• **Golob, Janvit**
  **1000 Ljubjana (SI)**
• **Tropenauer, Blaz**
  **9252 Radenci (SI)**

(54) **PREPARATION PROCESS FOR RECYCLING OF CATHODE SPENT POT LININGS**

(57)    The invention relates to a process for the preparation of spent pot lining material for use in recycling, wherein the spent pot lining material is coarsely ground and poured into a reactor to form packed bed column so that the granulation of the spent pot lining is in the range from 0 to 4 mm, and that the main fraction is in the range up to 3 mm, further the aforementioned filled layers of the ground spent pot lining are first washed with water and then a leaching is performed with a solution of sodium hydroxide - NaOH that has a concentration range from 0.05 to 0.48 mol/L and finally the spent pot lining material is once again washed with clean water until the measured electrical conductivity of the water reaches its entry level e.g. 0.5 mS/m. In all the above cases, a liquid to solid (L/S) ratio of 2.9:1 is used; washing and leaching procedures are repeated 2 to 7 times. In both the above steps, washing with water and leaching, hydrogen peroxide is added concurrently in twice the amount of the necessary stoichiometric quantity to decompose the cyanides present.

Slika 1

## Description

Overall, the invention relates to the recycling of cathode Spent Pot Linings (SPL) from aluminium production, arising from the electrolysis of alumina, so that the recycled linings can be safely used as a secondary raw material.

## THE TECHNICAL PROBLEM THAT THE INVENTION SOLVES AND STATE OF THE ART

Aluminium is produced by the electrolytic reduction of aluminium oxide (alumina) melt at high temperatures, in cryolite, which lowers the alumina melting point. The addition of aluminium trifluoride to the melt achieves stabilization of the melting point. The electrolysis of the mentioned alumina dissolved in molten cryolite generally takes place in a melting pot, an anode (graphite coke anode rod) is placed above the pot, and a conductive bottom, made of graphitised carbon - coke, serving as a cathode, is located underneath. The process is carried out employing a low voltage direct-current (approx. 2 V) with a high amperage (approx. 150,000 A). An electric current is passed from the anode, through the melt, to the cathode. The electrolytic cell consists of the before mentioned anode and housing, which, in addition to the conductive boundary layer, also includes load-bearing and insulating chamotte linings. The electrolyte cell has a limited operational lifetime, averaging between 6 and 9 years. Cathode carbon linings do not wear directly over time, but are nevertheless exposed to ageing, which is reflected in the penetration of the melt into the porous structure of the anode lining. During use, the graphite-carbon material of the cathode boundary layer and chamotte lining is gradually infused with the melt materials. These mainly consist of sodium fluoride (NaF) and cryolite. Due to the access of air, various cyanides ($CN^-$) form, reaching to a substance of up to 2% of the cathode boundary layer's weight. At the end of their operational lifetime, the electrolytic cells are disintegrated and dismantled, the metal components (contacts) are recycled, and the inorganic components of the housing are sorted. Thus, the spent cathode residue is obtained in the form of two main components: (I) the first component is a carbon electrically-conductive material (designated as First Cut - FC) with a carbon content (C) of 52-60% and (II) chamotte mineral material (designated as Second Cut - SC), with a low carbon content. Both carbon (black) - FC and chamotte (brick yellow) - SC materials are obtained by careful disassembly of the cathode pot lining and mechanical separation of both types of materials. Both components, FC and SC, are impregnated with crystallized sodium fluoride - NaF and cryolite in quantities of 18 to 25% NaF and cryolite from 9 to 14%. Various cyanides account for about 2% by weight of the total amount of SPL. Both components contain sodium oxide ($Na_2O$), which gives the strong alkaline sodium hydroxide - NaOH in a reaction with water. Both materials also contain small amounts of carbides (below 0.5%), which in contact with water, form inflammable gases, such as methane and hydrogen. Due to the content of these hazardous substances, both FC and SC materials are declared as hazardous waste.

The recycling of Spent Pot Linings (SPL), which is classified as environmentally hazardous waste, is an environmental challenge and must be carried out per environmental regulations.

There are several patents found within the state of the art hat address the preparation process of spent pot linings for use in recycling and offer economically and environmentally sound solutions. The disadvantage of these patents is that the design of the state of the art recycling procedures generally requires expensive technological solutions, often unnecessarily, which greatly increase the cost of investment into technological equipment. For example, in the process described in U.S. Pat. No. 6,596,252, after milling the spent pot lining material into granular material with a mean particle diameter of 0.6 mm, particles must be dispersed in water and mixed, then filtered. This process takes place at relatively high temperatures. All other processes under this patent are also energy demanding and expensive. This patent, like most state of the art patents, does not ensure explicit compliance with the requirements of environmental legislation.

The preparation process for the recycling of spent pot linings according to the invention represents a significant improvement over the state of the art. Tests performed have shown that the method accorded to the invention solves the perceived problems according to the state of the art, and has several advantages that are described below.

In the first stage, according to the invention, the ground spent pot linings, in granulation of 0 to 4 mm, the main fraction occurring in the range of 3 mm, is used to form a packed bed column inside the process vessel. The process according to the invention takes precedence over the state of the art already at this stage, since the spent pot linings do not have to be completely crushed to an exceptionally fine granulation with a particle diameter of 0.6 mm. The further steps of the process according to the invention also show its advantages, since, for example, less water is required for washing during the individual steps of the process.

In both phases of the process according to the invention, concurrently inside the washing cycle cyanides are decomposed by oxidation with addition of the hydrogen peroxide ($H_2O_2$), which also represents an improvement according to the state of the art. The crushed spent pot lining material is leached in a packed bed column with a sodium hydroxide (NaOH) solution at a concentration of 0.05 to 0.48 mol/litre. According to the state of the art, the concentration of sodium hydroxide is significantly higher (20 to 50 g/l), which indicates an advantage that the process according to the invention has over the state of the art. The process finishes with the final water washing to eliminate sodium residues. The washing phase is performed until electrical conductivity reaches the normal level of electrical conductivity of potable water (e.g. 0.5 mS/m). According to the state of the art, the criterion by which we complete the process is precisely defined and is not left to experiential instructions alone, such as the instruction that the washing procedure must be performed, for example, up to 5 times. Two more advantages of the process according to the invention over state of the art processes must be mentioned. Both phases are carried out in the same reactor, and no transport of the solid components to another reactor is required. Furthermore, both stages of the preparation process for the recycling of spent pot linings are carried out at temperatures around 25 °C ($\pm$ 5 °C), which is significantly less than the processes described in the state of the art.

The main motive of processing is to detoxify hazardous materials and wash out water-soluble fluoride salts, thus obtaining non-toxic materials that do not leach with water and can be used in a recycling process. Such materials can then be used as a raw material in recycling processes, for example, in the stone wool industry, construction, metallurgy and elsewhere.

The process, according to the invention, followed the abovementioned motive and took into account the requirements that the processes must be simple and economically justified. It has significantly improved the procedures as described in the state of art, as it is simpler, more cost-effective, and environmentally sound.

## DETAILED DESCRIPTION OF THE TECHNICAL SOLUTION

Further advantages and applicability of the invention will become even clearer even to the average expert from the following descriptions and pictures, hereinafter:

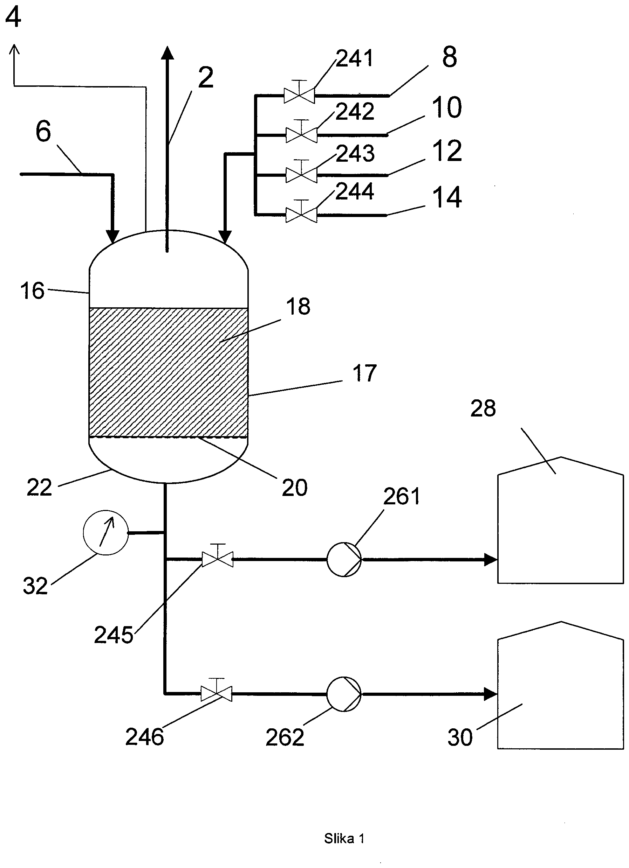

Figure 1 Schematic representation of the device in which the process according to the invention is carried out.

The process of preparing spent pot linings for recycling is generally carried out in devices that are specifically created for use in the preparation of spent pot linings for recycling. A schematic representation of the device in Figure 1, shows how the process according to the invention is generally carried out. The device's schematic representation does not technologically narrow the content of the process according to the invention, and it is used only for a more detailed explanation of the process.

In general, the device may include the following parts: a reactor 16 including an intake for granulated SPL 6, an outlet for processed SPL 2, a gas exhaust line for incineration 4, a peroxide ($H_2O_2$) inlet 8, an alkali-sodium hydroxide (NaOH) inlet 10, further water supply from recycling 12, clean water supply for washing 14, opening/closing valves 241, 242, 243, 244, a grate 20, liquid collector 22, pumps 261 and 262, liquid collector for after first rinsing 28 and a liquid collector for after the second rinsing 30 and a conductivity meter 32. The reactor 16 is divided into two parts, as shown in Figure 1. In the upper part there is a storage space 17, intended for the formation of the packed bed of the crushed spent pot lining material 18, in the lower part of the reactor 16 there is a liquid collector 22, where liquid is collected after each washing. Both mentioned reactor compartments 16, the storage compartment 17 and the liquid collector 22, are separated by a grate 20 that has attributes to prevent the crushed spent pot lining 18 to pass into the liquid collector space 22.

The process of preparing a spent pot lining for recycling according to the invention is the result of developmental work and numerous examples from experimental practice and is carried out as explained below.

Prior to carrying out the process according to the invention, in general, the spent pot lining 18 (SPL) is prepared for processing. In the first step of the first phase of the process according to the invention, the spent pot lining is generally crushed into granular material with particle diameter in a range from 0 to 4 mm. The main fraction of which is in the range of particle diameter of about 0 - 3 mm. The crushed spent pot lining 18 is then poured in a space 17 to form packed bed column marked as 18 on a figure 1.

In the next step, the crushed spent pot lining 18, in the form of packed bed column is washed several times with rinsing water. In the example shown, the water performs the function of rinsing water to dissolve compounds such as sodium fluoride (NaF) and sodium hydroxide (NaOH) and cyanides contained in the crushed spent pot lining 18. Water flows from the clean rinsing water supply 14 through valve 244, or from the recycling water supply 12 through valve 243 and then flows through the packed bed column 18 and is collected in the liquid collector 22.

The mass ratio of the rinsing water from the rinsing water supply 14 to the solid parts of the crushed spent material 18 deposited in the storage space 17 for one rinsing is generally in the range up to 2.9:1 (L/S ratio). The rinsing time is approximately 0.5 - 3 h. According to the invention, as shown by industrial practice, the washing must be repeated 2 to 7 times.

After the washing is finished, the water is removed by pumping the water with dissolved sodium fluoride and sodium hydroxide, generally by means of pump 261 via valve 245 into a special solution collector 28. At the same time, during the first washing with water, with the help of hydrogen peroxide, the process of decomposing cyanides contained in the crushed spent pot lining 18 takes place. From inlet 8, hydrogen peroxide ($H_2O_2$) is supplied to storage space 17. The amount of peroxide required for the decomposition of cyanides is controlled by the before mentioned valve 241. In general, twice the stoichiometric amount required for the decomposition of cyanides is supplied.

Upon completion of the first phase, the crushed SPL 18 remains in storage space 17, from which, in general, the compounds containing sodium fluoride, sodium hydroxide (NaOH) and cyanides are removed.

This is not the end of the process. The process continues into the second stage of preparing the spent pot lining for use in recycling according to the invention. The next phase is also carried out in the aforementioned reactor **16.**

At the beginning of the second phase, in the first step, a solution of alkali-sodium hydroxide (NaOH) is supplied from the inlet **10,** through the valve **242,** into the storage space **17** of the reactor **16,** in concentrations from 0.05 to 0.48 mol/L. The amount of sodium hydroxide solution required for each leaching is controlled and is in the range of the mass ratio of the liquid phase: solid phase (L/S) up to 2.9:1. According to the process according to the invention, several rinses are required. The described leaching is repeated, in general, 2 to 7 times. The leaching solution is generally collected in the liquid collector **22** and then pumped by pump **261** via valve **245** into a special solution collector **28.**

One rinse with alkali lasts, based on the tests performed, from 0.5 to 3 hours.

At the same time, in addition to the above-mentioned alkali leaching, the process of decomposing cyanides, which are still contained in the crushed spent pot lining **18** and which were not completely decomposed in the first phase of the process according to the invention, takes place. Hydrogen peroxide ($H_2O_2$) is again fed into the storage compartment **17** from inlet **8** through the valve **241.** The amount of peroxide required for the decomposition of cyanides is controlled. In general, twice the stoichiometric amount required for the decomposition of cyanides is supplied.

When this step is completed, the next step is performed, namely the packed bed column of the crushed spent pot lining **18,** in the storage compartment **17,** is rinsed with clean tap water **14,** via valve **244.** The rinsing is carried out until the electrical conductivity reaches the normal value of water from the water supply network (0.5 mS/m), which is measured with the instrument **32.** The water is, by means of pump **262** via valve **246,** pumped into the liquid collector for fluids after the second rinsing **30.**

The gases collected in the reactor space **16** are discharged through the gas exhaust valve **4** for incineration.

The processed crushed spent pot lining **18** is removed from the reactor **16** via mentioned outlet **2** for the processed SPL.

Both described stages of the SPL preparation process for use in recycling are generally carried out at temperatures of 25 ° C (± 5 ° C), which is significantly better than what is required by the state of the art processes.

The process according to the invention will be further illustrated by the following examples, which serve to illustrate the described process and in no way narrow the content of the invention.

EXAMPLE 1

A large number of tests were performed on manually separated SPL, where we eliminated the pure carbon part - FC material with a content of $C_{fix}$ = 53.7%, the total amount of cyanides 0.15%, 23.5% of water-soluble salts (NaF and $Na_2O$), and 12.3% of cryolite content. FC material with a granulation of 0-1 mm was exposed to the process of preparation of SPL according to the invention, by washing with tap water (conductivity 475 $\mu S/m$) in a L/S ratio of 2.8:1 and repeated three times. The washing times were: first wash 90 minutes, second wash 120 minutes, and third wash 150 minutes. During washing, twice the required amount of hydrogen peroxide ($H_2O_2$) was added to the water, i.e. 0.378% of the SPL by mass for the decomposition of cyanides. The process took place at a temperature of 19 °C. After the third rinse with water, the second leaching phase starts with a solution of sodium hydroxide (NaOH) at a concentration of 0.1 mol/L in a liquid: solid (L/S) ratio of 2.5:1. The leaching with the NaOH solution was repeated four times, namely: the first leaching lasted about 120 min, the second leaching was performed with a 0.15 mol/L NaOH solution for about 150 min, the third leaching with a 0.15 mol/L NaOH solution for 170 min and a fourth leaching with a 0.475 mol/L NaOH solution for about 150 min.

The addition of hydrogen peroxide was continued at a lower dose of 0.2% of the SPL by mass until the cyanide presence indicator could no longer record its presence. This occurred after a second leaching with a sodium hydroxide (NaOH) solution.

In the last phase of the preparation of the SPL according to the invention, the final washing of the compacted layer of the SPL with tap water of the above-mentioned conductivity was performed. The wash was performed in an L/S ratio of 1.5:1 with four iterations and was completed when the conductivity of the last washing water dropped to 0.500 mS/m.

No significant gas development was detected during the process according to the invention, only a slight - insignificant odour arising from the gases indicated their presence. We only removed the gases since they could not be incinerated due to the negligible quantity.

Analysis of the obtained solid purified SPL - carbon part of the FC has shown the carbon content of $C_{fix}$ = 83%, the content of cyanides of 0.009%, water - soluble salts (NaF and $Na_2O$) of 0.001% and the content of cryolite of 1.4%.

The water, previously used for washing, was used in the next wash for leaching.

$CaF_2$ was precipitated from the concentrated solution of NaF and NaOH with a limestone suspension ($Ca(OH)_2$) to the point where the precipitation of the $F^-$ ions in the solution was no longer demonstrated. The resulting solution of $Al(OH)_4^-$ and NaOH is used in a procedure for synthesizing zeolites. Filtered solid $CaF_2$

is used in metallurgy.

EXAMPLE 2

Manually separated chamotte (colour - brick yellow) - SC material with low carbon content $C_{fix}$ = 1.5%, cyanides content 0.1%, water-soluble salts (NaF and $Na_2O$) content 18.5% and cryolite content 9.3% with a granulation 1-3 mm was exposed to the process of preparation of SPL according to the invention, namely by washing with three iterations of tap water (conductivity 490 $\mu$S/m) with L/S ratio of 2.5:1. The approximate washing times were: first wash 80 minutes, second wash 100 minutes, and third wash 130 minutes. During washing, twice the required amount of hydrogen peroxide ($H_2O_2$) was added to the water, i.e. 0.252% of the SPL by mass for the decomposition of cyanides. The process took place at a temperature of 20 °C. After the third wash with water, the second leaching phase started with a solution of sodium hydroxide (NaOH) at a concentration of 0.08 mol/L in a liquid : solid (L/S) ratio of 2.3:1. The leaching with a NaOH solution was repeated four times, namely: the first leaching lasted 110 min, the second leaching was performed with a 0.1 mol/L NaOH solution for 120 min, the third leaching with a 0.15 mol/L NaOH solution for 150 min and the fourth leaching with a solution of a 0.3 mol/L NaOH solution for 150 min.

The addition of hydrogen peroxide was continued at a lower dose of 0.15% of the SPL by mass until the cyanide presence indicator could no longer record its presence. This occurred after the second leaching with the sodium hydroxide (NaOH) solution.

In the last stage of preparation of the SPL for use in recycling according to the invention, the final washing of the compacted layer of SPL with tap water of the above mentioned conductivity was performed. The washing was performed with an L/S ratio of 1.9:1 with four iterations, when the conductivity of the last washing water dropped to 0.500 mS/m.

No gas development was detected during the process according to the invention. Analysis of the obtained solid purified SPL - carbon part FC showed carbon content $C_{fix}$ = 1.9%, cyanide content 0.001%, water-soluble salts (NaF and $Na_2O$) 0.001% and cryolite content 1.1%.

The water, previously used for washing, was used in the next wash for leaching. The concentrated NaF and NaOH solution was preferentially added to the solution from Example 1 and then with the lime suspension ($Ca(OH)_2$) precipitated $CaF_2$ to the point where the precipitation of the $F^-$ ions in the solution was no longer demonstrated.

The presentation of the content of the invention can be concluded by finding that the process according to the invention, which is the result of numerous experiments, also demonstrated the expected results in practice. We have improved the methods described in the state of the art, the process according to the invention is simpler, more economically efficient, and environmentally sound. In the process according to the invention, generally higher levels of purity are achieved than according to the state of the art.

**Claims**

1. A process for the preparation of spent pot lining for use in recycling is **characterized by** that, the spent pot lining is first coarsely ground and poured into a reactor to form a packed bed column, further the packed bed column of the spent pot lining is first washed with water, then the same packed bed column is leached with a sodium hydroxide solution and finally washed again with water. In both steps, the washing with water and the leaching with a sodium hydroxide solution, hydrogen peroxide is added concurrently.

2. A process for the preparation of spent pot lining for use in recycling, according to patent claim 1, is **characterized by** that, the granulation of spent pot lining material lies in the range from 0 to 4 mm, and that the main fraction of spent pot lining is in the range 0 to 3 mm.

3. A process for the preparation of spent pot lining for use in recycling, according to patent claims 1 to 2, is **characterized by** that, during the first washing with water, the filled compacted layer of the crushed spent pot lining material is washed with water that has a liquid : solid mass ratio of up to 2.9:1 with iterations of 2 to 7 times.

4. A process for the preparation of spent pot lining for use in recycling, according to patent claims 1 to 3, is **characterized by** that, the final washing in the packed bed column of the crushed spent pot lining material is carried out with clean tap water to the point where the measured electrical conductivity of the water reaches its entry level e.g. 0.5 mS/m.

5. A process for the preparation of spent pot lining for use in recycling, according to patent claims 1 to 4, is **characterized by** that, the crushed spent pot lining material is leached with a solution of sodium hydroxide in a concentration range of 0.05 to 0.48 mol/L and a liquid : solid mass ratio of up to 2.9:1 with iterations of 2 to 7 times.

6. A process for the preparation of spent pot lining for use in recycling, according to patent claims 1 to 5, is **characterized by** that, in the step that mentioned the first washing with water and in the step that mentioned the washing with alkali, hydrogen peroxide is added concurrently in twice the amount of the necessary stoichiometric quantity to decompose the cy-

9 EP 3 868 907 A1 10

anides present.

7. A process for the preparation of spent pot lining for use in recycling, according to patent claim 6, is **characterized by** that, the typical contact times for leaching with the sodium hydroxide solution are from 0.5 to 3 hours.

8. A process for the preparation of spent pot lining for use in recycling, according to patent claims 1 - 7, is **characterized by** that, the aforementioned process for preparing spent pot lining material for use in recycling according to the invention is carried out at temperatures in the range of 25 °C $\pm$ 5 °C.

6

Slika 1

Europäisches
Patentamt

European
Patent Office

Office européen
des brevets

# EUROPEAN SEARCH REPORT

Application Number

EP 20 00 0382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 083 092 A1 (BEFESA ALUMINIO BILBAO S L [ES]) 29 July 2009 (2009-07-29) * claim 1 * | 1-8 | INV. C22B21/00 C22B1/18 C22B7/00 B09B3/00 |
| A | US 2002/114748 A1 (KASIREDDY VIJAYA [CA] ET AL) 22 August 2002 (2002-08-22) * claim 1 * | 1-8 | |
| A | US 5 723 097 A (BARNETT ROBERT J [US] ET AL) 3 March 1998 (1998-03-03) * claims 24,28 * | 1-8 | |
| A | AU 19841 92 A (COMALCO ALU) 17 August 1992 (1992-08-17) * page 1 * | 1-8 | |

TECHNICAL FIELDS
SEARCHED      (IPC)

C22B
B09C
B09B

The present search report has been drawn up for all claims

| Place of search | Date of completion of the search | Examiner |
|---|---|---|
| The Hague | 16 July 2021 | Martinez Miró, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 00 0382

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2021

| Patent document cited in search report | | | Publication date | Patent family member(s) | | | Publication date |
|---|---|---|---|---|---|---|---|
| EP 2083092 | A1 | | 29-07-2009 | AT | 460505 | T | 15-03-2010 |
| | | | | AU | 2009207898 | A1 | 30-07-2009 |
| | | | | BR | PI0907019 | A2 | 17-11-2015 |
| | | | | CA | 2704450 | A1 | 30-07-2009 |
| | | | | EP | 2083092 | A1 | 29-07-2009 |
| | | | | ES | 2342634 | T3 | 09-07-2010 |
| | | | | US | 2011045962 | A1 | 24-02-2011 |
| | | | | WO | 2009092539 | A1 | 30-07-2009 |
| US 2002114748 | A1 | | 22-08-2002 | AU | 774026 | B2 | 10-06-2004 |
| | | | | CA | 2327878 | A1 | 17-06-2001 |
| | | | | US | 2002114748 | A1 | 22-08-2002 |
| US 5723097 | A | | 03-03-1998 | NONE | | | |
| AU 1984192 | A | | 17-08-1992 | NONE | | | |

EPO FORM P0459

For more details about this annex : see Official Journal of the European Patent Office, No. 12/82

**EP 3 868 907 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6596252 B